# EUROPÄISCHE PATENTANMELDUNG

(11) **EP 4 137 679 A1**
(43) Veröffentlichungstag der Anmeldung: **22.02.2023**
(21) Anmeldenummer: 22189839.8
(22) Anmeldetag: 11.08.2022
(51) Int. Cl.: F01D 25/24, F01D 13/02, F16L 27/08

(54) **VERFAHREN ZUR MONTAGE VON TURBOMASCHINEN, TURBOMASCHINENANORDNUNG SOWIE SYSTEM ZU DER BEREITSTELLUNG EINER TURBOMASCHINENANORDNUNG**

(30) Priorität: 18.08.2021 DE 102021121441
(71) Anmelder: ATLAS COPCO ENERGAS GMBH, 50999 Köln (DE)
(72) Erfinder: Ulrich, Stauff, 50969 Köln (DE)
(74) Vertreter: Andrejewski - Honke Patent- und Rechtsanwälte Partnerschaft mbB

(57) **Zusammenfassung**

Die Erfindung betrifft Verfahren zur Montage einer Turbomaschinenanordnung. Dabei wird zumindest eine Turbomaschine (1) umfassend eine Turbostufe (1a, 1b) und zumindest ein Aggregat (2) installiert. Nachfolgend wird die Turbostufe (1a, 1b) mit dem Aggregat (2) durch eine Verbindungsleitung (8) strömungstechnisch direkt verbunden. Erfindungsgemäß wird in der Verbindungsleitung (8) ein exzentrisches Rohrstück (11, 11', 11") positioniert und eingefügt.

## Beschreibung

Die Erfindung betrifft ein Verfahren zur Montage einer Turbomaschinenanordnung wobei zumindest eine eine Turbostufe umfassende Turbomaschine und ein Aggregat installiert werden. Die Turbostufe und das Aggregat werden nachfolgend durch eine Verbindungsleitung direkt miteinander strömungstechnisch verbunden. Weiterhin ist Gegenstand der Erfindung eine Turbomaschinenanordnung sowie ein System zur Bereitstellung einer Turbomaschinenanordnung.

Turbomaschinen im Sinne der vorliegenden Erfindung bezeichnen Strömungsmaschinen, welche Rotationsenergie einer Welle in Strömungs- und/oder Druckenergie eines Prozessfluids umwandeln können und umgekehrt. Hierzu zählen insbesondere ein- oder mehrstufige Turbokompressoren, Turbopumpen sowie Expander bzw. Turbinen. Dabei lässt sich die Erfindung auf Turbomaschinen axialer und radialer Bauart gleichermaßen anwenden.

Weiterhin werden Turbomaschinen im Verbund mit zusätzlichen Aggregaten betrieben. Hierbei kann es sich insbesondere um Wärmetauscher handeln, in denen das Prozessfluid nach oder vor dem Durchlaufen der Turbostufe temperiert wird. Weiterhin können Aggregate auch als Filter- bzw. Flüssigkeitsabscheidevorrichtungen vorgesehen sein.

Die Erfindung geht von einer Turbomaschinenanordnung aus, bei dem die Turbostufe einer Turbomaschine mit einem solchen Aggregat durch eine Verbindungsleitung strömungstechnisch verbunden ist. Je nach Strömungsrichtung wird dadurch das die Turbostufe verlassende Prozessmedium im Betrieb dem zugeordneten Aggregat zugeleitet bzw. wird das Prozessmedium nach dem Verlassen des Aggregats der Turbostufe zugeführt.

Aufgrund der aufwändigen Konstruktion ist es üblich, eine Turbomaschine und die zugeordneten Aggregate - zumindest ab einer gewissen Baugröße - separat herzustellen und erst am vorgesehenen Aufstellungsort miteinander zu verbinden. Es ergibt sich jedoch das Problem, dass Turbomaschine und Aggregat nicht mit beliebiger Präzision zueinander vorkonfektioniert werden können. Dabei kumulieren sich etwaige Fertigungstoleranzen der Turbomaschine und des Aggregats mit Ungenauigkeiten bei der Installation der Turbomaschine und des Aggregats am Aufstellungsort. Während der Installation werden Turbomaschine und Aufstellungsort positioniert und fixiert - etwa durch Verbindung mit einem Maschinenfundament und/oder einem gemeinsamen Tragrahmen. Auch hierbei ist mit geringfügigen Abweichungen von den vorgesehenen Positionierungen zu rechnen. Es ist daher nicht möglich, die vorgesehene Verbindungsleitung hinreichend präzise vorzukonfektionieren, sodass diese nur noch mit der Turbostufe und dem Aggregat verbunden werden müsste.

In der Praxis hat man daher zumindest bei einfachen Anwendungen vielfach flexible Elemente wie Kunststoffpuffer oder gewellte Rohrelemente in die Verbindungsleitung eingebracht, um die Toleranzen in der Verbindungsleitung zwischen der Turbostufe und dem Aggregat auszugleichen. Derartige elastische Lösungen haben jedoch den Nachteil, dass diese nicht für Hochdruckanwendungen und gegebenenfalls auch nicht für aggressive Prozessmedien geeignet sind. Daher müssen die Verbindungsleitungen in solchen Anwendungsfällen aus Rohrstücken vor Ort eingepasst werden. Hierbei entsteht ein erheblicher Arbeitsaufwand, welcher auch erst nach der Installation der Turbomaschine und des Aggregats bewältigt werden kann. Zusätzlich sorgt der Zuschnitt von metallenen Rohrleitungen am Aufstellungsort zu einem zusätzlichen Sicherheitsrisiko beispielsweise durch Funkenflug. Auch können durch die nachträgliche Bearbeitung vor Ort Veredelung und Beschichtungen an der Leitungsinnenseite beschädigt werden.

Vor diesem Hintergrund liegt der Erfindung die Aufgabe zugrunde, die Montage einer Turbomaschinenanordnung zu vereinfachen und zu beschleunigen. Dabei soll die Verbindungsleitung soweit es geht bereits im Vorfeld vorkonfektioniert werden. Etwaige Herstellungs- und Installations-Toleranzen können im Rahmen der Erfindung mit bereits vor der Installation vorbereiteten Teilen ausgeglichen werden, ohne dabei die Dichtigkeit und Eignung für Hochdruckanwendungen zu beeinträchtigen.

Gegenstand der Erfindung und Lösung dieser Aufgabe ist ein Verfahren nach Anspruch 1, eine Turbomaschinenanordnung nach Anspruch 6 sowie ein System nach Anspruch 20. Bevorzugte Ausgestaltungen sind in den abhängigen Unteransprüchen angegeben.

Im Rahmen des gattungsgemäßen Montageverfahrens ist vorgesehen, dass zumindest eine Turbomaschine umfassend eine Turbostufe installiert wird. Ebenso wird zumindest ein Aggregat installiert und die Turbostufe mit dem Aggregat durch eine Verbindungsleitung verbunden. "Installiert" meint dabei insbesondere, dass die Turbomaschine bzw. das Aggregat an ihren Bestimmungsort verbracht und dort befestigt wird.

Erfindungsgemäß ist vorgesehen, dass in der Verbindungsleitung ein exzentrisches Rohrstück positioniert und eingefügt wird. Dabei wird insbesondere durch eine relative Verdrehung des exzentrischen Rohrstücks gegenüber der Verbindungsleitung ein Toleranzausgleich bezüglich der relativen Positionierung zwischen dem Aggregat und der Turbostufe vorgenommen.

Gemäß einer besonders bevorzugten Ausgestaltung wird das exzentrische Rohrstück aus einem Satz geometrisch verschiedener exzentrischer Rohrstücke ausgewählt. Hierdurch kann ein zusätzlicher Ausgleich von Toleranzen bewirkt werden.

Gemäß einer besonders bevorzugten Ausgestaltung des Verfahrens weist die Turbostufe oder eine bereits vor der Installation der Turbomaschine fest mit der Turbostufe verbundener Teil der Verbindungsleitung ein erstes Anschlussende auf. Ebenso weist das Aggregat oder ein bereits vor der Installation des Aggregats damit fest verbundener Teil der Verbindungsleitung ein zweites Anschlussende auf. Das exzentrische Rohrstück wird dabei vorzugsweise - mittelbar oder unmittelbar - zwischen dem ersten Anschlussende und dem zweiten Anschlussende angeordnet. Die beiden Anschlussenden sind dabei bevorzugt bereits werkseitig derartig vorkonfektioniert, dass das exzentrische Rohrstück - vorbehaltlich eines Toleranzausgleichs durch Drehung - unmittelbar oder vermittelt durch ein oder mehrere weitere exzentrische Rohrstücke zwischen dem ersten Anschlussende und dem zweiten Anschlussende eingefügt werden kann.

Besonders bevorzugt ist dabei vorgesehen, dass nach der Installation der Turbomaschine und nach der Installation des Aggregats die relative Position des ersten Anschlussendes und des zweiten Anschlussendes zueinander vermessen werden. Anschließend wird das exzentrische Rohrstück in Abhängigkeit von der relativen Position ausgewählt und/oder ausgerichtet. Dabei werden ganz besonders bevorzugt zwischen dem ersten Anschlussende und dem zweiten Anschlussende zwei oder mehr hintereinander angeordnete exzentrische Rohrstücke integriert.

Ausgehend von der gattungsgemäßen Turbomaschinenanordnung ist im Rahmen eines zweiten Aspekts der Erfindung vorgesehen, dass die Verbindungsleitung zumindest ein exzentrisches Rohrstück umfasst. Das exzentrische Rohrstück weist dabei insbesondere einen Einlassabschnitt und einen Auslassabschnitt auf, welche um jeweils nicht fluchtende Achsen ausgebildet sind. Der Einlassabschnitt und der Auslassabschnitt können jeweils mit dem Einlass oder Auslass der Turbostufe bzw. des Aggregats oder daran angeschlossenen Rohrleitungsteilen verbunden werden. Infolge der Exzentrizität des Rohrstücks kann durch eine Drehung auch eine relative Verschiebung zwischen dem Einlassstück und dem Auslassstück erzielt werden. Hierdurch lassen sich relative Toleranzen zwischen der Turbostufe und dem Aggregat ausgleichen. Die relative Positionierung von Einlass und Auslass erfolgt dabei in einem Freiheitsgrad entlang einer Kreisbahn.

Um eine möglichst feine Einstellung zu ermöglichen, ist das exzentrische Rohrstück mit der Turbostufe und dem Aggregat - bzw. jeweils daran angeschlossenen Rohrleitungsteilen der Verbindungsleitung - verschweißt bzw. verlötet. Alternativ oder zusätzlich können zur Verbindung an dem exzentrischen Rohrstück und einem Verbindungspartner jeweils Flansche vorgesehen sein, welche erst nach der Positionierung zur Ermöglichung einer Schraubverbindung - vorzugsweise gemeinsam - durchbohrt werden.

Alternativ oder zusätzlich ist es möglich die Rohr-Verbindungen mit sogenannten Losflanschen herzustellen. Hierbei weisen die miteinander zu verbindenden Rohrenden eine Erweiterung - insbesondere in Form eines Flanschansatzes - auf. Über das Rohrende wird ein nicht mit dem Rohr fest verbundener Flanschring gezogen, sodass dieser auf der Erweiterung formschlüssig abgestützt ist. Der lose Flanschring kann an dem zugeordneten anderen Rohrende mit einem fest ausgebildeten Flansch oder einem zweiten Losflansch verbunden - d. h. insbesondere verschraubt - und verspannt werden.

Ebenso lässt sich im Rahmen der Erfindung ein Rohrkupplung-System einsetzen, welches in eine Nut im Bereich des Rohrendes eingreift. Derartige Verbindungsysteme werden nach einem namhaften Hersteller auch als "Victaulic-System" bezeichnet. Eine solche Rohrverbindung ermöglicht ein stufenloses Verdrehen der Rohrenden und ist bei entsprechender Auslegung auch für Hochdruckanwendungen mit einem Innendruck von 100 bar und mehr geeignet.

Während die Verbindungsleitung mehrteilig ausgebildet sein kann, ist das exzentrische Rohrstück vorzugsweise einteilig bzw. einstückig - d.h. aus mehreren miteinander untrennbar verbundenen Komponenten - ausgebildet. Die Verbindungsleitung kann auch ausschließlich durch das exzentrische Rohrstück gebildet sein.

Gemäß einer bevorzugten Ausgestaltung weist das exzentrische Rohrstück einen um eine erste Achse symmetrisch ausgebildeten Einlassabschnitt und einen um eine zweite Achse symmetrisch ausgebildeten Auslassabschnitt auf. Einlassabschnitt und Auslassabschnitt weisen somit eine Rohrform auf und können in besonders einfache Weise mit Rohrleitungen bzw. Rohrleitungsstutzen verbunden werden.

Gemäß einer besonders bevorzugten Ausgestaltung sind dabei die erste und die zweite Achse zueinander parallel ausgerichtet. Hierdurch ändert sich bei einem Verdrehen des exzentrischen Rohrstücks die Ausrichtung im Raum nicht. Das exzentrische Rohrstück kann damit insbesondere zum toleranz-ausgleichenden Verbinden parallel verlaufender Rohrenden genutzt werden.

Gemäß einer bevorzugten Ausgestaltung ist der Einlassabschnitt rohrförmig mit einem Einlassdurchmesser und der Auslassabschnitt rohrförmig mit einem Auslassdurchmesser ausgebildet. Diese sind an die Durchmesser der zur Verbindung vorgesehenen Teile der Verbindungsleitung bzw. die Anschlussstücke der Turbostufe oder des Aggregats angepasst.

Bevorzugt beträgt der Einlassdurchmesser dabei zwischen dem 0,5-fachen und dem 2,0-fachen des Auslassdurchmessers. Besonders bevorzugt ist das exzentrische Rohrstück als Erweiterungsstück ausgebildet, wobei der Einlassdurchmesser zwischen 0,5-fachen und dem 0,8-fachen des Auslassdurchmessers beträgt. In dieser Variante erfüllt das exzentrische Rohrstück gleichzeitig die Funktion einer Querschnittserweiterung. Dies ist insbesondere dann von Vorteil, wenn die Verbindungsleitung von einer als Kompressor ausgebildeten Turbostufe in Richtung eines als Zwischenkühler ausgebildeten Aggregats geführt wird. Das aus dem Kompressor austretende Prozessmedium wird dabei im exzentrischen Rohrstück abgebremst und mit geringerer Strömungsgeschwindigkeit dem Wärmetauscher zugeleitet. Hierdurch kann der Wärmeübertrag in dem Zwischenkühler verbessert werden. Das exzentrische Reduzierstück erfüllt dabei neben der Toleranz-Anpassung eine zusätzliche strömungstechnische Aufgabe.

Vorzugsweise weisen die erste Achse und die zweite Achse einen minimalen Abstand auf, welcher zwischen dem 0,1-fachen und dem 0,5-fachen des Auslassdurchmessers beträgt. In diesem Wertebereich ist ein effektiver Toleranzausgleich durch Drehung möglich, während gleichzeitig eine turbulenzarme Strömung durch die Verbindungsleitung möglich bleibt.

Besonders bevorzugt sind der Einlassabschnitt und der Auslassabschnitt derart angeordnet, dass sie tangential an eine gemeinsame Außenebene anschließen. Dadurch kann eine Seitenwand durchgängig zwischen dem Einlassabschnitt und dem Auslassabschnitt gerade gebildet sein.

Gemäß einer besonders bevorzugten Ausgestaltung weist die Verbindungsleitung ein zweites exzentrisches Rohrstück auf. Durch die Kombination mehrerer in Reihe geschalteter exzentrischer Rohrstücke kann der Toleranzausgleich auf einem zweiten Freiheitsgrad erweitert werden. Hierdurch kann eine besonders präzise Einstellung erfolgen.

Dabei weist das zweite exzentrische Rohrstück insbesondere einen um eine dritte Achse ausgebildeten zweiten Einlassabschnitt und einen um eine vierte Achse symmetrisch ausgebildeten zweiten Auslassabschnitt auf. Die dritte Achse und die vierte Achse sind besonders bevorzugt parallel zu der ersten Achse und der zweiten Achse des (ersten) exzentrischen Rohrstücks ausgerichtet.

Auch kann das (erste) exzentrische Rohrstück gemäß einer bevorzugten Ausgestaltung unmittelbar an das zweite exzentrische Rohrstück anschließen. Beide Maßnahmen dienen dazu, mit dem ersten exzentrischen Rohrstück und dem zweiten exzentrischen Rohrstück eine zusammenhängende Verstell-Einheit zu bilden, welche sich im Montageprozess modular im Strömungsweg der Verbindungsleitung einsetzen lässt.

Gemäß einer besonders bevorzugten Ausgestaltung ist vorgesehen, dass das Aggregat einen Wärmetauscher, insbesondere einen Zwischenkühler bildet. Derartige Aggregate profitieren besonders beim Herstellungsaufwand und den Herstellungskosten, wenn geringere Anforderungen an die Maß-Toleranzen gelegt werden. Entsprechend vorteilhaft lässt sich die erfindungsgemäße Ausgleichs-Vorrichtung einsetzen.

Vorzugsweise weist die Turbostufe oder ein mit der Turbostufe festverbundener Teil der Verbindungsleitung ein erstes Anschlussende auf. Analog weist das Aggregat oder ein mit dem Aggregat festverbundener Teil der Verbindungsleitung ein zweites Anschlussende auf. Das exzentrische Rohrstück ist - mittelbar oder unmittelbar - zwischen dem ersten Anschlussende und dem zweiten Anschlussende angeordnet. Der Zweck des exzentrischen Rohrstücks besteht darin, eine Toleranzanpassung zwischen dem ersten Anschlussende und dem zweiten Anschlussende bereitzustellen.

Insbesondere weist das erste Anschlussende einen ersten Verbindungsflansch und das zweite Anschlussende einen zweiten Verbindungsflansch auf. Diese sind besonders bevorzugt parallel zueinander ausgerichtet.

Gemäß einer besonders bevorzugten Ausgestaltung sind der erste Verbindungsflansch und der zweite Verbindungsflansch jeweils senkrecht zu einer ersten Richtung, insbesondere Vertikalrichtung, ausgerichtet und zueinander in der ersten Richtung beabstandet angeordnet. Dabei befinden sich das erste Anschlussende und das zweite Anschlussende projiziert in der ersten Richtung zumindest teilweise zueinander in Deckung.

Vorzugsweise umfasst die Turbomaschine eine zweite Turbostufe, welche mit dem Aggregat durch eine zweite Verbindungsleitung verbunden ist. Dies ist insbesondere der Fall, wenn das Aggregat als Zwischenkühler zwischen zwei in Reihe geschalteten Kompressorstufen ausgebildet ist.

Besonders bevorzugt weist das Aggregat oder ein mit dem Aggregat festverbundener Teil der zweiten Verbindungsleitung ein drittes Anschlussende und die zweite Turbostufe oder ein mit der zweiten Turbostufe festverbundener Teil der zweiten Verbindungsleitung ein viertes Anschlussende auf, welche entweder unmittelbar oder unter Zwischenschaltung einer zweiten starren Verbindungsleitung miteinander verbunden sind. Bei der Montage können die Turbomaschine und das Aggregat derart positioniert werden, dass das dritte Anschlussende und das vierte Anschlussende - gegebenenfalls unter Zwischenschaltung der zweiten Verbindungsleitung - miteinander verbunden werden können. Etwaige Toleranzen und fehlt Fassungen lassen sich im Rahmen der Erfindung durch das exzentrische Rohrstück ausgleichen. Ein Toleranzausgleich ist bei der zweiten Verbindungsleitung nicht erforderlich.

Gegenstand der Erfindung ist auch ein System zur Bereitstellung einer Turbomaschinenanordnung wie zuvor beschrieben. Dabei umfasst das System die separaten Baugruppen einer Turbomaschine mit zumindest einer Turbostufe, eines Aggregats, insbesondere eines Wärmetauschers und einer, vorzugsweise modularen, Verbindungsleitung zur Verbindung der Turbostufe mit dem Aggregat.

Teile der Verbindungsleitung können dabei insbesondere bereits werkseitig mit der Turbostufe bzw. mit dem Aggregat verbunden sein. Erfindungsgemäß umfasst das System zumindest ein exzentrisches Rohrstück, welches in die Verbindungsleitung integrierbar ist. Darunter ist zu verstehen, dass das Rohrstück derart in die Verbindungsleitung zwischen der Turbostufe und dem Aggregat eingefügt werden kann, dass eine dichte strömungstechnische Verbindung hergestellt wird. Das exzentrische Rohrstück ist dabei derart ausgebildet, dass es an den Verbindungsstellen in unterschiedlichen rotatorischen Positionen angesetzt werden kann. Durch diese unterschiedliche relative Dreh-Positionierung kann ein Toleranzausgleich in einer oder mehreren Raumrichtungen erfolgen.

Gemäß einer bevorzugten Ausgestaltung der Erfindung umfasst das System einen Satz exzentrischer Rohrstücke, welche sich geometrisch unterscheiden. Dieser Satz ist dafür ausgebildet und vorgesehen, dass daraus jeweils ein exzentrisches Rohrstück ausgewählt und in die Verbindungsleitung integriert werden kann. Neben der relativen Positionierung (Drehung) des exzentrischen Rohrstücks ermöglicht die Auswahl eines Rohrstücks mit entsprechender Geometrie einen zusätzlichen Freiheitsgrad bei der Anpassung der Verbindungsleitung. Dabei sind die Anschlussbereiche der unterschiedlichen exzentrischen Rohrstücke des Satzes untereinander derart ähnlich ausgebildet, dass sie gleichsam zur Integration in die Verbindungsleitung - d. h. zur Verbindung mit der Turbostufe, dem Aggregat und/oder weiteren Rohrleitungsteilen geeignet sind.

Vorzugsweise weisen die exzentrischen Rohrstücke des Satzes jeweils einen mit einem Einlassdurchmesser ausgebildeten und um eine erste Achse symmetrisch ausgebildeten Einlassabschnitt und einen einen Auslassabschnitt aufweisenden und um eine zweite Achse symmetrisch ausgebildeten Auslassabschnitt auf. Einlassabschnitt und Auslassabschnitt sind dabei jeweils austauschbar zum Anschluss an Rohrleitungen oder Rohrleitungsstutzen geeignet.

Um eine Interoperabilität der unterschiedlichen exzentrischen Rohrstücke des Satzes zu gewährleisten, weisen diese jeweils vorzugsweise denselben Einlassdurchmesser und denselben Auslassdurchmesser auf. Ebenso ist vorzugsweise vorgesehen, dass die erste Achse und die zweite Achse parallel zueinander ausgerichtet sind. Ganz besonders unterscheiden sich die unterschiedlichen exzentrischen Rohrstücke des Satzes im Wesentlichen durch die Exzentrizität - d. h. den (minimalen) Abstand zwischen der ersten Achse und der zweiten Achse. Die eindimensionale Beweglichkeit entlang einer Kreisbahn wird dadurch um zusätzliche Radien dieser Kreisbahn erweitert.

Ein weiterer Aspekt der Erfindung besteht in der Verwendung eines exzentrischen Rohrstücks, insbesondere eines exzentrischen Reduzierstücks zur Toleranzanpassung in den Verbindungsleitungen einer Turbomaschinenanordnung.

Die Erfindung wird nachfolgend anhand von lediglich Ausführungsbeispiele darstellenden Figuren erläutert. Es zeigen dabei schematisch:
- Fig. 1: eine Seitenansicht einer erfindungsgemäßen Turbomaschinenanordnung,
- Fig. 2: eine Frontalansicht der Turbomaschinenanordnung aus Fig. 1,
- Fig. 3: eine schematische Draufsicht auf das exzentrische Rohrstück aus den Figuren 1 und 2,
- Fig. 4: eine Seitenansicht einer alternativen Ausgestaltung und
- Fig. 5: eine schematische Draufsicht auf die exzentrischen Rohrleitungen aus Fig. 4.

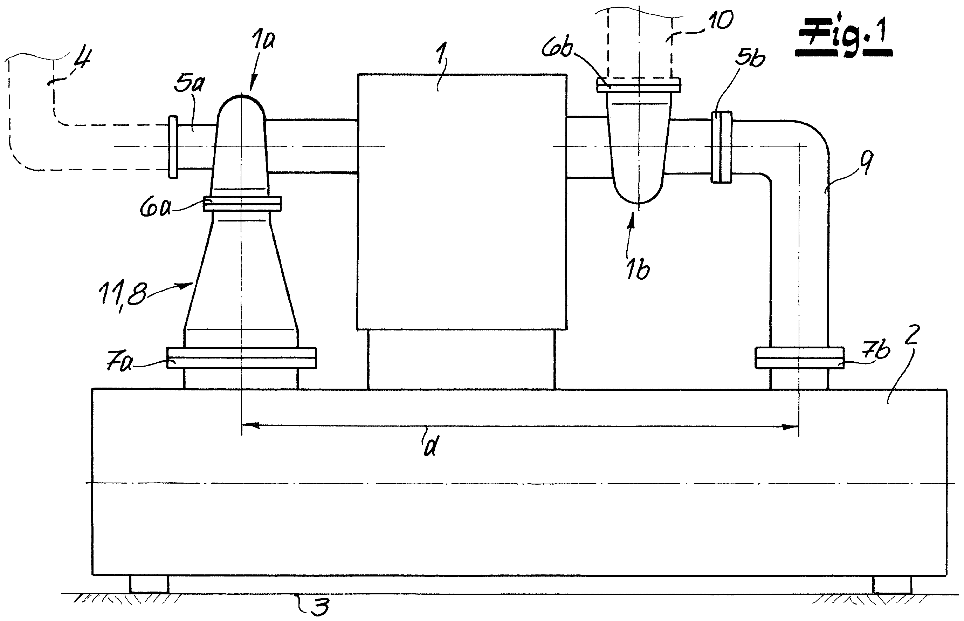

Die Fig. 1 zeigt eine Seitenansicht einer erfindungsgemäßen Turbomaschinenanordnung mit einer Turbomaschine 1 und einem als Zwischenkühler ausgebildeten Aggregat 2. Die Turbomaschine 1 und das Aggregat 2 sind dabei auf einem gemeinsamen Maschinenfundament 3 aufgestellt. Die Turbomaschine 1 weist eine erste Turbostufe 1a und eine zweite Turbostufe 1b auf. Im gezeigten Ausführungsbeispiel ist die Turbomaschine 1 ein zweistufiger Turbokompressor, wobei der Antrieb und weitere Versorgungsleitungen aus Gründen der Einfachheit nicht dargestellt sind. Die erste Kompressorstufe 1a weist einen Ansaugstutzen auf, welche mit einer lediglich gestrichelt angedeuteten Zuflussleitung 4 verbunden ist. Das Prozessfluid tritt an einem ersten Kompressoreinlass 5a in die erste Turbostufe 1a ein und tritt durch einen ersten Kompressorauslass 6a nach der Verdichtung wieder aus. Das Aggregat 2 weist seinerseits einen Kühlereinlass 7a sowie einen Kühlerauslass 7b auf. Der erste Kompressorauslass 6a ist mit dem Kühlereinlass 7a durch eine Verbindungsleitung 8 strömungstechnisch verbunden. Andererseits ist der Kühlerauslass 7b durch eine zweite Leitung 9 mit dem zweiten Kompressoreinlass 5b der zweiten Kompressorstufe 1b verbunden. Das in der zweiten Kompressorstufe 1b weiter verdichtete Prozessfluid tritt über einen zweiten Kompressorauslass 6b aus und wird einer Abflussleitung 10 zugeführt.

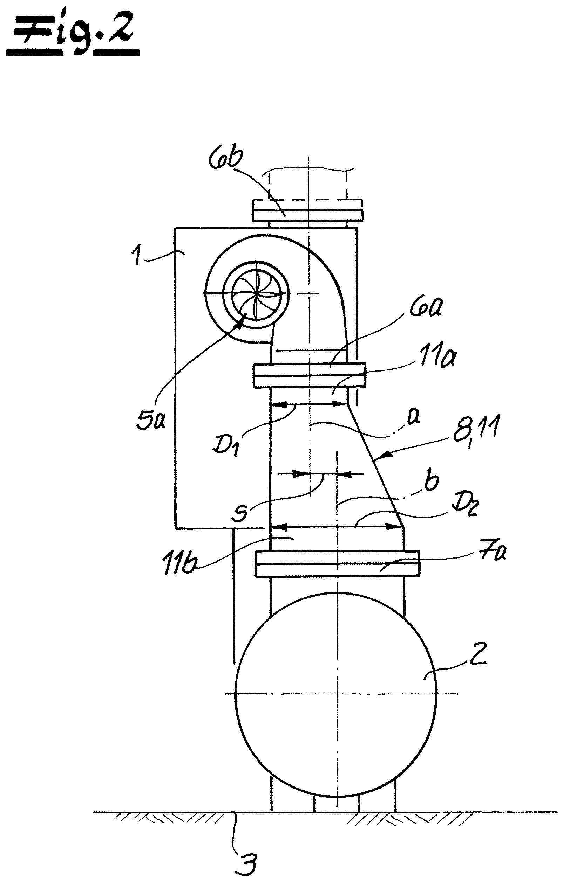

Um Abweichungen des Abstandes d zwischen dem Kühlereinlass 7a und dem Kühlerauslass 7b auszugleichen, ist ein Toleranzausgleich erforderlich. Wie man einer vergleichenden Betrachtung der Figuren 1 und 2 entnimmt, ist die Verbindungsleitung 8 im gezeigten Ausführungsbeispiel als exzentrisches Rohrstück 11 ausgebildet. Dabei weist das exzentrische Rohrstück 11 einen um eine erste Achse a ausgebildeten Einlassabschnitt 11a und einen um eine zweite Achse b symmetrisch ausgebildeten Auslassabschnitt 11b auf. Die beiden Achsen a, b sind zueinander parallel ausgerichtet.

Der Einlassabschnitt ist rohrförmig um die erste Achse a mit einem Einlassdurchmesser D₁ ausgebildet. Entsprechend ist der Auslassabschnitt 11b um die zweite Achse b rohrförmig mit einem Auslassdurchmesser D₂ geformt. Der Abstand s zwischen der ersten Achse a und der zweiten Achse b beträgt im gezeigten Ausführungsbeispiel ungefähr ein Viertel des Einlassdurchmessers. Der Abstand s sowie die beiden Durchmesser D₁, D₂ sind derart aufeinander abgestimmt, dass die Außenwandung des Einlassabschnitts 11a und des Außenabschnitts 11b an einer Seite miteinander fluchten.

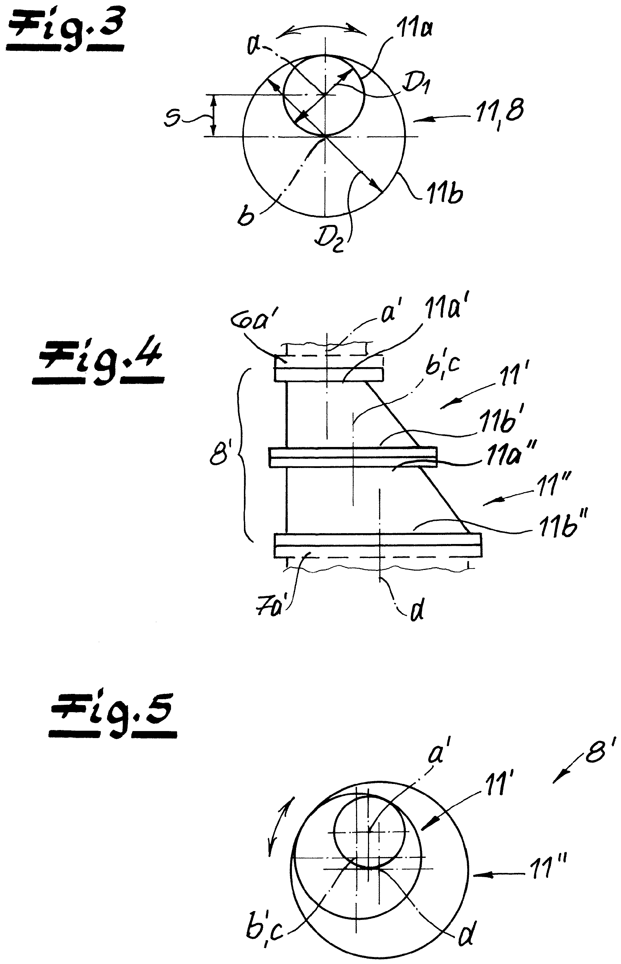

Die Funktionsweise des Toleranzausgleichs wird anhand der schematischen Darstellung in Fig. 3 deutlich. Durch eine Verdrehbewegung - beispielsweise des Auslassbereichs 11b auf dem Kühlereinlass 7a - wird die räumliche Position der ersten Achse a und des sie umgebenden Einlassabschnitts 11a in der Horizontalebene verlagert. Dabei ist das exzentrische Rohrstück 11 vorzugsweise in einer Grundposition derart ausgebildet, dass der Abstand zwischen der ersten Achse a unter zweiten Achse b senkrecht zu der für den Toleranzausgleich vorgesehenen Richtung ausgerichtet ist. Bei kleinen Drehwinkeln ändert sich daher die relative Position der beiden Achsen vornehmlich in dieser vorgesehenen Ausgleichsrichtung. Positionsänderungen dazu senkrecht sind bei kleinen Drehwinkeln auch unter Berücksichtigung der Kreisbahnform sehr gering.

In den Figuren 4 und 5 ist eine weitere Variante dargestellt, welche eine verbesserte Positionierbarkeit in zwei Raumrichtungen der Horizontalenebene ermöglicht. Dazu ist die Verbindungsleitung 8' mit einem ersten exzentrischen Rohrstück 11' und einem zweiten exzentrischen Rohrstück 11" ausgebildet. Die Anschlüsse eines Kompressorauslasses 6a' sowie eines Kühlereinlasses 7a'sind lediglich gestrichelt angedeutet.

Der Einlassabschnitt 11a' des ersten exzentrischen Rohrstücks ist symmetrisch um eine erste Achse a' ausgebildet und schließt an den Kompressorauslass 6a' an. Der Auslassabschnitt 11b' des ersten exzentrischen Rohrstücks ist symmetrisch um eine zweite Achse b' ausgebildet und mit dem Einlassabschnitt 11a" des zweiten exzentrischen Rohrstücks 11" verbunden, welcher um eine dritte Achse c symmetrisch ausgebildet ist. Die zweite Achse b' und die dritte Achse c sind dabei zueinander fluchtend ausgerichtet. Der Auslassbereich 11b" des zweiten exzentrischen Rohrstücks ist seinerseits um eine vierte Achse d symmetrisch ausgebildet und mit dem Kühlereinlass 7a' verbunden bzw. verbindbar.

Wie man der schematischen Darstellung aus Fig. 5 entnimmt, kann durch eine relative Verdrehung des ersten exzentrischen Rohrstücks 11' gegenüber dem zweiten exzentrischen Rohrstück 11" sowie durch die Verdrehung der gesamten Verbindungsleitung 8' (gegenüber der Turbomaschine 1 und dem Aggregat 2) eine zweidimensionale Verstellung in der Horizontalenebene erreicht werden.

## Patentansprüche

1. Verfahren zur Montage einer Turbomaschinenanordnung wobei zumindest eine Turbomaschine (1) umfassend eine Turbostufe (1a, 1b) installiert wird, wobei zumindest ein Aggregat (2) installiert wird und wobei die Turbostufe (1a, 1b) mit dem Aggregat (2) nachfolgend durch eine Verbindungsleitung (8) strömungstechnisch direkt verbunden wird, **dadurch gekennzeichnet, dass** in der Verbindungsleitung (8) ein exzentrisches Rohrstück (11, 11', 11") positioniert und eingefügt wird.

2. Verfahren nach Anspruch 1, **dadurch gekennzeichnet, dass** das exzentrische Rohrstück (11, 11', 11") aus einem Satz geometrisch verschiedener exzentrischer Rohrstücke (11, 11', 11") ausgewählt wird.

3. Verfahren nach Anspruch 1 oder 2, **dadurch gekennzeichnet, dass** die Turbostufe (1a, 1b) oder eine bereits vor der Installation der Turbomaschine (1) fest mit der Turbostufe (1a, 1b) verbundener Teil der Verbindungsleitung (8) ein erstes Anschlussende aufweist, dass das Aggregat (2) oder ein bereits vor der Installation des Aggregats (2) damit fest verbundener Teil der Verbindungsleitung (8) ein zweites Anschlussende aufweist und dass das exzentrische Rohrstück (11, 11', 11") zwischen dem ersten Anschlussende und dem zweiten Anschlussende angeordnet wird.

4. Verfahren nach Anspruch 3, **dadurch gekennzeichnet, dass** nach der Installation der Turbomaschine (1) und nach der Installation des Aggregats (2) die relative Position des ersten Anschlussendes und des zweiten Anschlussendes zueinander vermessen werden und dass das exzentrische Rohrstück (11, 11', 11") in Abhängigkeit von der relativen Position ausgewählt und/oder ausgerichtet wird.

5. Verfahren nach Anspruch 3 oder 4, **dadurch gekennzeichnet, dass** zwischen dem ersten Anschlussende und dem zweiten Anschlussende zwei oder mehr exzentrische Rohrstücke (11' 11") hintereinander angeordnet werden.

6. Turbomaschinenanordnung, insbesondere erhältlich nach einem Verfahren gemäß der Ansprüche 1 bis 5, mit einer Turbomaschine (1) umfassend zumindest eine Turbostufe (1a, 1b) und mit zumindest einem Aggregat (2), wobei die Turbostufe (1a, 1b) mit dem Aggregat (2) durch eine Verbindungsleitung (8) strömungstechnisch direkt verbunden ist, **dadurch gekennzeichnet, dass** die Verbindungsleitung (8) zumindest ein exzentrisches Rohrstück (11, 11', 11") umfasst.

7. Turbomaschinenanordnung nach Anspruch 6, **dadurch gekennzeichnet, dass** das exzentrische Rohrstück (11, 11') einen um eine erste Achse (a, a') symmetrisch ausgebildeten Einlassabschnitt (11a, 11a') und einen um eine zweite Achse (b, b') symmetrisch ausgebildeten Auslassabschnitt (11b, 11b') aufweist.

8. Turbomaschinenanordnung nach Anspruch 7, **dadurch gekennzeichnet, dass** die erste Achse (a, a') und die zweite Achse (b, b') zueinander parallel ausgerichtet sind.

9. Turbomaschinenanordnung nach Anspruch 7 oder 8, **dadurch gekennzeichnet, dass** der Einlassabschnitt (11a) rohrförmig mit einem Einlassdurchmesser (D₁) und dass der Auslassabschnitt (11b) rohrförmig mit einem Auslassdurchmesser (D₂) ausgebildet sind.

10. Turbomaschinenanordnung nach Anspruch 9, **dadurch gekennzeichnet, dass** der Einlassdurchmesser (D₁) zwischen dem 0,5-fachen und dem 2,0-fachen, insbesondere zwischen dem 0,5-fachen und dem 0,8-fachen des Auslassdurchmessers (D₂) beträgt.

11. Turbomaschinenanordnung nach Anspruch 9 oder 10, **dadurch gekennzeichnet, dass** die erste Achse (a, a') und die zweite Achse (b, b') einen Abstand zwischen dem 0,1-fachen und dem 0,5-fachen des Auslassdurchmessers (D₂) beträgt.

12. Turbomaschinenanordnung nach einem der Ansprüche 6 bis 11, **dadurch gekennzeichnet, dass** die Verbindungsleitung (8) ein zweites exzentrisches Rohrstück (11") umfasst.

13. Turbomaschinenanordnung nach Anspruch 12 und 8, **dadurch gekennzeichnet, dass** das zweite exzentrische Rohrstück (11") einen um eine dritte (c) Achse ausgebildeten zweiten Einlassabschnitt (11a") und einen um eine vierte Achse (d) symmetrisch ausgebildeten zweiten Auslassabschnitt (11b") aufweist und dass die dritte Achse (c) und die vierte Achse (d) parallel zu der ersten Achse (a) und der zweiten Achse (b) ausgerichtet sind.

14. Turbomaschinenanordnung nach Anspruch 12 oder 13, **dadurch gekennzeichnet, dass** das exzentrische Rohrstück (11') unmittelbar an das zweite exzentrische Rohrstück (11") anschließt.

15. Turbomaschinenanordnung nach einem der Ansprüche 6 bis 14, **dadurch gekennzeichnet, dass** das Aggregat (2) ein Wärmetauscher, insbesondere ein Zwischenkühler ist.

16. Turbomaschinenanordnung nach einem der Ansprüche 6 bis 15, **dadurch gekennzeichnet, dass** die Turbostufe (1a, 1b) oder ein mit der Turbostufe (1a, 1b) festverbundener Teil der Verbindungsleitung (8) ein erstes Anschlussende aufweist, dass das Aggregat (2) oder ein mit dem Aggregat (2) festverbundener Teil der Verbindungsleitung (8) ein zweites Anschlussende aufweist und dass das exzentrische Rohrstück (11, 11', 11") zwischen dem ersten Anschlussende und dem zweiten Anschlussende angeordnet ist.

17. Turbomaschinenanordnung nach Anspruch 16, **dadurch gekennzeichnet, dass** das erste Anschlussende einen ersten Verbindungsflansch und das zweite Anschlussende einen zweiten Verbindungsflansch aufweist und dass sowohl der erste Verbindungsflansch als auch der zweite Verbindungsflansch jeweils senkrecht zu einer ersten Richtung, insbesondere Vertikalrichtung, ausgerichtet und zueinander in der ersten Richtung beabstandet angeordnet sind.

18. Turbomaschinenanordnung nach Anspruch 17, **dadurch gekennzeichnet, dass** sich das erste Anschlussende und das zweite Anschlussende projiziert in der ersten Richtung zumindest teilweise in Deckung befinden.

19. Turbomaschinenanordnung nach einem der Ansprüche 6 bis 18, **dadurch gekennzeichnet, dass** die Turbomaschine (1) eine zweite Turbostufe (1b) umfasst, welche mit dem Aggregat (2) durch eine zweite Verbindungsleitung (9) verbunden ist, dass das Aggregat (2) oder ein mit dem Aggregat (2) festverbundener Teil der zweiten Verbindungsleitung (9) ein drittes Anschlussende aufweist, dass die zweite Turbostufe (1b) oder ein mit der zweiten Turbostufe (1b) festverbundener Teil der zweiten Verbindungsleitung (9) ein viertes Anschlussende aufweist und dass das dritte Anschlussende und das vierte Anschlussende entweder unmittelbar oder unter Zwischenschaltung eines zweiten starren Rohrstücks miteinander verbunden sind.

20. System zu der Bereitstellung einer Turbomaschinenanordnung nach einem der Ansprüche 6 bis 19, umfassend eine Turbomaschine (1) mit zumindest einer Turbostufe (1a, 1b), mit zumindest einem Aggregat (2) , insbesondere einem Wärmetauscher, und mit einer Verbindungsleitung (8) zur Verbindung der Turbostufe (1a) mit dem Aggregat (2) , **gekennzeichnet durch** zumindest ein exzentrisches Rohrstück (11, 11', 11"), welches in die Verbindungsleitung (8) integrierbar ist.

21. System nach Anspruch 20, **gekennzeichnet durch** einen Satz exzentrischer Rohrstücke, welche sich geometrisch unterscheiden und **dadurch gekennzeichnet, dass** das exzentrische Rohrstück (11, 11', 11") aus dem Satz ausgewählt ist.

22. System nach Anspruch 21, **dadurch gekennzeichnet, dass** die exzentrischen Rohrstücke des Satzes jeweils mit einem einen Einlassdurchmesser aufweisenden und um eine erste Achse symmetrisch ausgebildeten Einlassabschnitt und mit einem einen Auslassdurchmesser aufweisenden und um eine zweite Achse symmetrisch ausgebildeten Auslassabschnitt ausgebildet sind.

23. System nach Anspruch 22, **dadurch gekennzeichnet, dass** die exzentrischen Rohrstücke des Satzes jeweils denselben Einlassdurchmesser und denselben Auslassdurchmesser aufweisen.

24. System nach Anspruch 22 oder 23, **dadurch gekennzeichnet, dass** bei allen exzentrischen Rohrstücken des Satzes die erste Achse und die zweite Achse parallel ausgebildet sind und dass sich die exzentrischen Rohrstücke (lediglich) hinsichtlich des Abstandes zwischen der ersten Achse und der zweiten Achse unterscheiden.
